# FASCICULE DE BREVET EUROPEEN

(11) **EP 2 529 266 B1**
(45) Date de publication et mention de la délivrance du brevet: **04.01.2017**
(21) Numéro de dépôt: 10784968.9
(22) Date de dépôt: 03.11.2010
(51) Int. Cl.: G02B 27/01, B60K 37/02

(54) **DISPOSITIF D'AFFICHAGE, NOTAMMENT POUR VEHICULE AUTOMOBILE**
ANZEIGEVORRICHTUNG, INSBESONDERE FÜR AUTOMOBILKRAFTFAHRTEUGE
DISPLAY DEVICE, IN PARTICULAR FOR A MOTOR VEHICLE

(30) Priorité: 27.01.2010 DE 102010005783
(43) Date de publication de la demande: 05.12.2012
(73) Titulaire: Johnson Controls Technology Company, Holland, MI 49423 (US)
(72) Inventeur: BOX, Benoît, F-95620 Parmain (FR)
(74) Mandataire: Schwöbel, Thilo K.
(86) Numéro de dépôt international: PCT/EP2010/006694
(87) Numéro de publication internationale: WO 2011/091825

(56) Documents cités:
- GB-A- 2 390 259
- US-A- 4 837 551
- US-A- 5 394 203
- US-A- 5 748 346
- US-A- 5 786 932
- US-A1- 2004 127 262
- US-A1- 2004 229 662

## Description

La présente invention concerne un dispositif d'affichage, notamment pour véhicule automobile.

Des dispositifs d'affichage de type à vision tête haute (HUD, head up display) sont connus, notamment avec la projection d'une image vers un pare brise comme décrit dans le document US 521447 ou vers un élément de réflexion.

Le document US 5 748 346 A divulgue un dispositif selon le préambule de la revendication 1.

Les dispositifs d'affichage à vision à tête haute permettent de projeter une information dans le champ de vision de l'espace devant le véhicule automobile afin que le conducteur du véhicule automobile puisse lire cette information sans quitter des yeux l'espace devant le véhicule automobile. En même temps, l'information peut être lue sans modification de l'accommodation des yeux du conducteur du véhicule.

Il est avantageux que - suivant les besoins ou les goûts d'un utilisateur du véhicule - l'élément de réflexion peut soit être utilisé soit être dans un état de repos.

Un inconvénient de tels dispositifs selon l'art connu consiste dans le fait que le changement de position de l'élément de réflexion et d'un moyen de couvercle nécessite l'emploi des moyens mécaniques souvent compliqués qui présentent, par ailleurs, des faiblesses lors d'une utilisation quotidienne et prolongée pendant plusieurs années.

La présente invention a notamment pour but de palier aux inconvénients de l'art connu, et notamment ceux cités ci-dessus, et a également pour but de proposer un dispositif d'affichage à vision à tête haute ayant un élément de réflexion qui peut être positionné dans une position de repos et dans une position d'affichage par l'intermédiaire d'un simple mécanisme ayant une grande stabilité et une durée de vie prolongé malgré une utilisation fréquente.

Suivant la présente invention, ce but est atteint par un dispositif d'affichage, notamment pour véhicule automobile, comprenant un module de projection pour générer une image en vue d'une projection dans la direction normale de regard d'un utilisateur du dispositif d'affichage selon un chemin optique, le dispositif d'affichage comprenant un élément de réflexion étant susceptible d'être déplacé entre une première position de repos et une deuxième position d'affichage, l'élément de réflexion dans sa position d'affichage étant prévu dans la direction normale de regard de l'utilisateur, l'élément de réflexion comprenant un plan d'extension principale, et lors du déplacement de l'élément de réflexion entre sa première position de repos et sa deuxième position d'affichage, l'élément de réflexion est soumis à un mouvement rotatif autour d'un axe de rotation, l'axe de rotation s'étendant dans une direction essentiellement perpendiculaire au plan d'extension principale de l'élément de réflexion, où le dispositif d'affichage est associé à un tableau de bord, le tableau de bord comprenant au moins un indicateur à cadran rond, comprenant un cadran, l'axe de rotation de l'élément de réflexion s'étendant dans une direction essentiellement perpendiculaire au plan d'extension principale du cadran de l'indicateur à cadran rond, où le plan d'extension principale de l'élément de réflexion et le plan d'extension principale du cadran sont prévus essentiellement parallèles, caractérisé en ce que dans la position de repos de l'élément de réflexion, l'élément de réflexion est positionné au moins partiellement derrière le cadran par rapport à la direction normale de regard de l'utilisateur. De par ces perfectionnements du dispositif d'affichage, il est avantageusement possible de prévoir le mouvement du moyen de couvercle également de façon simple et mécaniquement stable.

Un autre perfectionnement préféré de l'invention réside dans le fait que le dispositif d'affichage comprend un moyen de couvercle de l'élément de réflexion, le moyen de couvercle couvrant l'élément de réflexion lorsque celui-ci est positionné dans sa première position de repos.

De par une telle réalisation d'un dispositif d'affichage, il est avantageusement possible d'éliminer ou au moins de réduire le risque d'endommagement de l'élément de réflexion lors celui-ci est dans sa première position de repos.

D'après une variante de la présente invention, il est aussi préféré que l'élément de réflexion soit entraîné entre sa première position de repos et sa deuxième position de d'affichage par l'intermédiaire d'un moteur.

Un autre perfectionnement préféré de l'invention réside dans le fait que l'élément de réflexion est positionné dans sa première position de repos dans une fente du tableau de bord.

De par une telle réalisation d'un dispositif d'affichage, il est avantageusement possible de prévoir une très bonne utilisation de l'espace prévu pour l'élément de réflexion.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
la figure 1 est une vue schématique sur un indicateur à cadran rond d'un tableau de bord avec un élément de réflexion dans plusieurs positions, et
la figure 2 est une vue schématique de section d'un dispositif d'affichage selon la présente invention.

### DESCRIPTION DES DESSINS

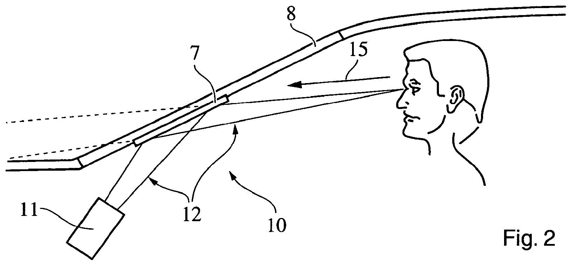

Comme le montre la figure 2 du dessin annexé, un dispositif d'affichage 10 selon la présente invention comprend un module de projection 11 qui génère une image dans la direction normale de regard 15 d'un utilisateur du dispositif d'affichage 10 selon un chemin optique 12.

Le chemin optique 12 comprend normalement au moins un élément de réflexion 7. De cette manière, le chemin optique 12 peut comprendre un élément (unique) de réflexion, comme représenté dans la figure 2. Par ailleurs, le chemin optique 12 peut aussi comprendre deux éléments de réflexion.

La direction normale de regard 15 est la direction de vue d'un utilisateur du dispositif d'affichage 10, notamment un conducteur de véhicule, lorsque celui-ci regarde, notamment à travers un pare brise 8, l'extérieur qui se trouve devant le véhicule.

Selon la présente invention, l'élément de réflexion 7 est un élément positionné en écart par rapport au pare brise 8. L'élément de réflexion 7 peut être positionné dans une première position de repos e dans une deuxième position d'affichage. Lorsque l'élément de réflexion 7 est positionné dans sa deuxième position d'affichage, l'élément de réflexion 7 est typiquement positionné quasiment verticalement de façon à ce que l'utilisateur du dispositif d'affichage puisse regarder à travers l'élément de réflexion 7. Lorsque l'élément de réflexion 7 est positionné dans sa première position de repos, l'élément de réflexion 7 est soumis à un mouvement rotatif de telle sorte que l'élément de réflexion 7 n'est pas (ou presque pas) visible par l'utilisateur.

Selon la présente invention, l'axe de rotation de ce mouvement rotatif de l'élément de réflexion 7 entre sa première position de repos et sa deuxième position d'affichage s'étend dans une direction essentiellement perpendiculaire au plan d'extension principale de l'élément de réflexion 7.

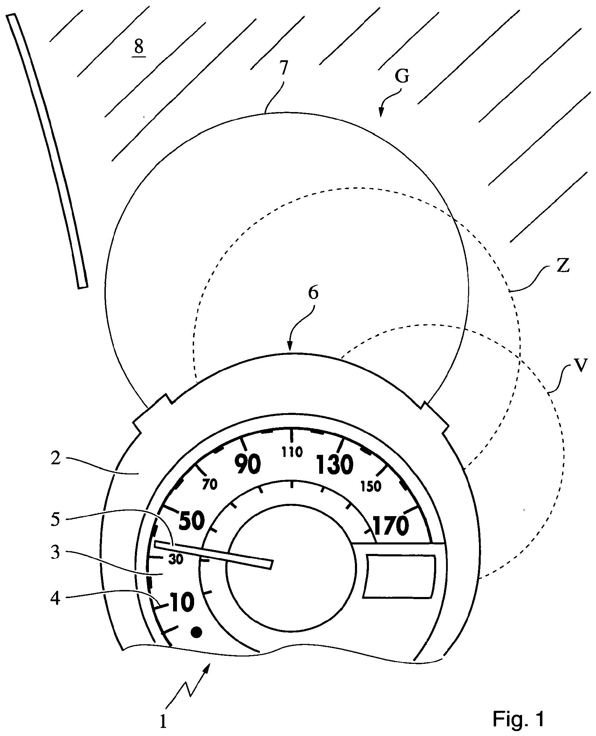

Ceci peut être vu dans la figure 1, laquelle représente une vue schématique sur un indicateur à cadran rond 2 d'un tableau de bord 1 avec un élément de réflexion 7 dans plusieurs positions.

L'élément de réflexion 7 peut être positionné dans sa première position de repos V, dans une position intermédiaire Z et dans sa deuxième position d'affichage G. Le tableau de bord 1 (encore appelé combiné d'instruments) comprend l'indicateur à cadran rond 2 avec un cadran 3, une graduation 4, et une aiguille 5. Le tableau de bord 1 comprend également une protection 6 en forme de saillie pour permettre à l'utilisateur de lire les instruments et affichages même dans des situations d'ensoleillement fort.

Selon un mode de réalisation préféré de l'invention, un moyen de couvercle peut être prévu pour couvrir l'élément de réflexion 7 lorsque celui-ci est positionné dans sa première position de repos.

De préférence, l'axe de rotation de l'élément de réflexion 7 s'étend dans une direction essentiellement perpendiculaire au plan d'extension principale du cadran 3 de l'indicateur 2 à cadran rond. Par ailleurs, le plan d'extension principale de l'élément de réflexion 7 et le plan d'extension principale du cadran 3 peuvent de préférence être positionnés ou orientés de façon essentiellement parallèles.

Ainsi, il est avantageusement possible que l'élément de réflexion 7 dans sa première position de repos est positionné dans un évidement ou dans une fente derrière le tableau de bord ou dans une fente dans le tableau de bord 1. Un tel évidement ou une telle fente est de toute façon positionné derrière le plan du cadran 3 de l'instrument 2 à cadran rond.

Par ailleurs, il est avantageusement possible que l'élément de réflexion 7 est positionné dans sa première position de repos de telle manière que pour un utilisateur l'élément de réflexion 7 peut être rangé de manière quasiment sans une fente apparente.

### Liste des références

- 1: tableau de bord
- 2: indicateur à cadran rond
- 3: cadran
- 4: graduation
- 5: aiguille
- 6: protection
- 7: élément de réflexion
- 8: pare brise
- 10: dispositif d'affichage
- 11: module de projection
- 12: chemin optique
- 15: direction normale de regard

## Revendications

1. Dispositif d'affichage (10), notamment pour véhicule automobile, comprenant un module de projection pour générer une image en vue d'une projection dans la direction normale de regard (15) d'un utilisateur du dispositif d'affichage (10) selon un chemin optique (12), le dispositif d'affichage (10) comprenant un élément de réflexion (7) étant susceptible d'être déplacé entre une première position de repos et une deuxième position d'affichage, l'élément de réflexion (7) dans sa position d'affichage étant prévu dans la direction normale de regard (15) de l'utilisateur, l'élément de réflexion (7) comprenant un plan d'extension principale, et lors du déplacement de l'élément de réflexion (7) entre sa première position de repos et sa deuxième position d'affichage, l'élément de réflexion (7) étant soumis à un mouvement rotatif autour d'un axe de rotation, l'axe de rotation s'étendant dans une direction essentiellement perpendiculaire au plan d'extension principale de l'élément de réflexion (7), le dispositif d'affichage (10) étant associé à un tableau de bord (1), le tableau de bord (1) comprenant au moins un indicateur (2) à cadran rond, comprenant un cadran (3), l'axe de rotation de l'élément de réflexion (7) s'étendant dans une direction essentiellement perpendiculaire au plan d'extension principale du cadran (3) de l'indicateur (2) à cadran rond, le plan d'extension principale de l'élément de réflexion (7) et le plan d'extension principale du cadran (3) étant prévus essentiellement parallèles, **caractérisé en ce que** dans la position de repos de l'élément de réflexion (7), l'élément de réflexion (7) est positionné au moins partiellement derrière le cadran (3) par rapport à la direction normale de regard (15) de l'utilisateur.

2. Dispositif d'affichage (10) selon la revendication 1, **caractérisé en ce que** le dispositif d'affichage (10) comprend un moyen de couvercle de l'élément de réflexion (7), le moyen de couvercle couvrant l'élément de réflexion (7) lorsque celui-ci est positionné dans sa première position de repos.

3. Dispositif d'affichage (10) selon l'une quelconque des revendications précédentes, **caractérisé en ce que** l'élément de réflexion est entraîné entre sa première position de repos et sa deuxième position de d'affichage par l'intermédiaire d'un moteur.

4. Dispositif d'affichage (10) selon l'une quelconque des revendications précédentes, **caractérisé en ce que** l'élément de réflexion (7) est positionné dans sa première position de repos dans une fente du tableau de bord (1).

## Patentansprüche

1. Anzeigevorrichtung (10), insbesondere für Kraftfahrzeug, die ein Projektionsmodul zum Erzeugen eines Bildes für eine Projektion in der normalen Blickrichtung (15) eines Benutzers der Anzeigevorrichtung (10) gemäß einem optischen Weg (12) umfasst, wobei die Anzeigevorrichtung (10) ein Reflexionselement (7) umfasst, das zwischen einer ersten Ruheposition und einer zweiten Anzeigeposition bewegbar ist, wobei das Reflexionselement (7) in seiner Anzeigeposition in der normalen Blickrichtung (15) des Benutzers vorgesehen ist, wobei das Reflexionselement (7) eine Haupterstreckungsebene umfasst und wobei das Reflexionselement (7) bei der Bewegung des Reflexionselements (7) zwischen seiner ersten Ruheposition und seiner zweiten Anzeigeposition einer Drehbewegung um eine Rotationsachse unterliegt, wobei sich die Rotationsachse in einer Richtung erstreckt, die zu der Haupterstreckungsebene des Reflexionselements (7) im Wesentlichen senkrecht ist, wobei die Anzeigevorrichtung (10) einem Armaturenbrett (1) zugeordnet ist, wobei das Armaturenbrett (1) mindestens eine Rundzifferblattanzeige (2) mit einem Zifferblatt (3) umfasst, wobei sich die Rotationsachse des Reflexionselements (7) in einer Richtung erstreckt, die zu der Haupterstreckungsebene des Zifferblattes (3) der Rundzifferblattanzeige (2) im Wesentlichen senkrecht ist, wobei die Haupterstreckungsebene des Reflexionselements (7) und die Haupterstreckungsebene des Zifferblattes (3) im Wesentlichen parallel vorgesehen sind, **dadurch gekennzeichnet, dass** in der Ruheposition des Reflexionselements (7) das Reflexionselement (7) relativ zu der normalen Blickrichtung (15) des Benutzers mindestens teilweise hinter dem Zifferblatt (3) positioniert ist.

2. Anzeigevorrichtung (10) nach Anspruch 1, **dadurch gekennzeichnet**, die Anzeigevorrichtung (10) ein Element zur Abdeckung des Reflexionselements (7) umfasst, wobei das Abdeckungselement das Reflexionselement (7) abdeckt, wenn dieses in seiner ersten Ruheposition positioniert ist.

3. Anzeigevorrichtung (10) nach einem der vorhergehenden Ansprüche, **dadurch gekennzeichnet, dass** das Reflexionselement zwischen seiner ersten Ruheposition und seiner zweiten Anzeigeposition mittels eines Antriebs angetrieben ist.

4. Anzeigevorrichtung (10) nach einem der vorhergehenden Ansprüche, **dadurch gekennzeichnet, dass** das Reflexionselement (7) in seiner ersten Ruheposition in einem Schlitz des Armaturenbretts (1) positioniert ist.

## Claims

1. Display device (10), in particular for a motor vehicle, comprising a projection module for generating an image for projection in the normal viewing direction (15) of a user of the display device (10) along an optical path (12), the display device (10) comprising a reflection element (7) which can be displaced between a first, idle position and a second, display position, the reflection element (7), in the display position thereof, being provided in the normal viewing direction (15) of the user, the reflection element (7) comprising a primary plane of extension, and, during the displacement of the reflection element (7) between the first, idle position thereof and the second, display position thereof, the reflection element (7) being subjected to a rotational movement about an axis of rotation, the axis of rotation extending in a direction substantially perpendicular to the primary plane of extension of the reflection element (7), the display device (10) being associated with a dashboard (1), the dashboard (1) comprising at least one round-dial indicator (2), comprising a dial (3), the axis of rotation of the reflection element (7) extending in a direction substantially perpendicular to the primary plane of extension (3) of the round-dial indicator (2), the primary plane of extension of the reflection element (7) and the primary plane of extension of the dial (3) being provided substantially parallel, **characterised in that**, in the idle position of the reflection element (7), the reflection element (7) is positioned behind the dial (3) at least in part in the normal viewing direction (15) of the user.

2. Display device (10) according to claim 1, **characterised in that** the display device (10) comprises a cover means for the reflection element (7), the cover means covering the reflection element (7) when it is positioned in the first, idle position thereof.

3. Display device (10) according to either of the preceding claims, **characterised in that** the reflection element is driven between the first, idle position thereof and the second, display position thereof by way of a motor.

4. Display device (10) according to any of the preceding claims, **characterised in that** the reflection element (7), in the first, idle position thereof, is positioned in a slot in the dashboard (1).
